# EUROPEAN PATENT APPLICATION

(11) **EP 1 788 342 A1**
(43) Date of publication of application: **23.05.2007**
(21) Application number: 05077635.0
(22) Date of filing: 21.11.2005
(51) Int. Cl.: F42B 12/06, F42B 33/00

(54) **Process for the production of a jacketed penetrator**

(71) Applicant: Nederlandse Organisatie voor Toegepast-Natuurwetenschappelijk Onderzoek TNO, 2628 VK Delft (NL)
(72) Inventor: Carton, Eric Peter, 2497 AA Den Haag (NL); Stuivinga, Marianne Euphemia Corry, 2628 RX Delft (NL)
(74) Representative: Winckels, Johannes Hubertus F.

(57) **Abstract**

The invention is directed to a process for the production of a jacketed penetrator having a tungsten, tungsten alloy or depleted uranium core and a metallic jacket, which process comprises placing the core inside the jacket and explosively welding the jacket on the core.

## Description

The present invention is directed to a process for the production of a jacketed penetrator having a tungsten, tungsten heavy alloy (WHA) or depleted uranium core and a metallic jacket.

Kinetic energy ammunition is used to defeat armour. It consists of a long rod of a heavy metal that is accelerated to a velocity between 1200 and 2500 m/s. In the gun barrel a sabot is used to transfer the pressure of the propellant to the accelerating long rod. Outside the gun barrel the sabot separates from the long rod that flies independently to the target. Due to the high mass and velocity (hence kinetic energy) of the rod, upon impact with an armour material a very high pressure arises at the penetrator-target interface. This pressure will be much higher then the dynamic yield strength of the metals involved. Therefore, the target material or both metals will start to flow and a crater is formed in the target material. This penetration process continues as long as the velocity of the penetrator is high enough (the stagnation pressure remains above the dynamic yield strength of the target material) and it remains a penetrating length.

In order to increase the penetration performance of the penetrator it should have a high density as well as a large length. Therefore, tungsten (W) and depleted uranium (DU) based metals with a density above 17 g/cm3 are frequently used as penetrator material. However, there are limits to the mass that can be accelerated by a canon to the required velocity. Therefore, in order to give the penetrator a large length, it is given a large L/D-ratio. These, so-called, long rod penetrators have successfully been used to defeat armour with a thickness equal to or even more than the penetrator length. However, due to the high L/D-ratio, these penetrators are very sensitive to yaw (angle between the axial axis and the direction of flight) and they break-up easily due to their small diameter. Long slender penetrators also can give a yawed impact by simple elastic bending due to their relatively small bending stiffness. In order to increase the strength and bending stiffness long rod penetrators can be sheathed or jacketed with a second material.

Jacketed penetrators have been used long before, mainly due to the low strength and brittleness of the first generations of tungsten heavy alloys (WHA). In order to be able to survive their acceleration, the WHA rod had to be sheated by a tube of a metal alloy that was strong enough. Later, the strength of the WHA was increased to an acceptable level and a jacket material was no longer necessary. The mass of the jacket also has to be accelerated and it was thought that a jacket even was detrimental to the penetration capabilities of the WHA long rod penetrator.

Nowadays, the need for jacketing the long rod penetrator reappeared. This is caused by the trend to increase the L/D-ratio of the penetrator to values well above 30. Their bending stiffness then becomes rather low and the surface to which the sabot forces can be transferred to the rod is reduced. Furthermore, more advanced targets have a separated amour (an active armour or a thin armour plate at a certain distance before a main armour plate). Long rod penetrators are quite sensitive to the bending and rotation (yaw) caused by the (often) inclined impact with the separated target. Furthermore, they break up easier than a penetrator with a large diameter. Therefore, to make the long rod penetrator less vulnerable a strengthening and stiffening jacket is useful.

It has been determined that the penetration performance in half-infinit targets is not influenced as long as the jacket material takes less than 40% of the penetrator cross-section. Therefore, using a jacket material with a lower density then that of the rod, the same target can be defeated with a penetrator rod of lower mass (providing longer shooting range or using less gun powder to reduce barrel erosion).

In order to obtain the required high velocity, high acceleration forces have to be transferred from the sabot to the jacket. The jacket should be able to transfer large shear forces to the heavy alloy rod. This requires a high bonding strength between the rod material and the jacket. Many different bonding processes have been tried and developed, like shrink fitting, hammering, brazing, adhesive bonding and additive manufacturing by lay-over or laser welding.

However, these processes have drawbacks like insufficient bonding strength, damage to the heavy alloy rod by mechanical mistreatment or heat input (reducing the ductility or strength of the heavy alloy), long processing time (reducing production capacity) and high manufacturing costs. The additive manufacturing processes suffers also from the low quality of the layer applied, due to remaining porosity caused by welding faults as well as a non-optimal microstructure.

US-A 2004/0158969 described one of these processes, namely heating the jacket to such a temperature that the inside diameter is sufficiently increased that the core can be placed inside it. After that, the combination is cooled down and an interference shrink-fit is obtained.

It has further been described to produce a jacketed penetrator by explosive consolidation and jacketing of WHA (tungsten heavy alloy) powder inside a steel jacket at high temperatures. Disadvantages of this method are the lack of possibility to optimize the process and the properties of the penetrator. The method leads to changes in the metal properties, due to temperature and consolidation. Further the need to use high temperatures in combination with explosive consolidation, will lead to weak interface strength due to the forming of intermetallic phases here.

It is an object of the present invention to provide a process for the production of a jacketed penetrator, based on a metallic jacket and a heavy metal core, which process does not have the above disadvantages.

The process of the invention is accordingly characterised by placing the core inside the jacket and explosively cladding the jacket on the core.

It has been found that by using this process of explosive welding the sheath or jacket on the heavy metal core, a penetrator may be produced having superior properties in terms of mechanical properties, interface (shear) strength and a practically free choice in metal (alloy) type of the jacket material as well as its wall thickness.

The process of this invention makes use of a tube material that can be obtained with the optimal wall thickness, alloy composition, as well as microstructure and heat treated condition for its optimal functioning as jacket. It is non-porous and normally less expensive compared to the same alloy mass in powder. By explosive cladding of this tube or jacket onto the surface of a heavy metal alloy rod a high metal-to-metal bonding is generated between the two. Explosive cladding is usually done with ammonium-nitrate based explosives, but other explosives could suitably be used such as ion exchange explosives or diluted high explosives.

From the clad rod produced in this way, a jacketed penetrator can be machined that has the required bonding strength and properties for optimal functioning. Explosive cladding is a one-step process that is of short duration and it can be applied on a very wide range of dissimilar metal alloy combinations. Furthermore, as a solid state room temperature process, it does not change the microstructure of the metals involved. Hence, the (optimal) mechanical properties provided by the alloy manufacturer are maintained.

Explosive bonds have proven to be able to provide very high quality bonds that have a high (shear) strength and ductility. Both are essential for an optimal penetration performance during armour impact.

The material of the tube may be selected from conventional steel materials (such as unalloyed carbon steel, mild steel, high strength steel, maraging steel), titanium-alloys, aluminum-alloys, nickel-alloys, berylium alloys, etc.

The rod or core is produced from heavy metal or heavy metal alloys. In practice tungsten, tungsten heavy alloys (WHA) or depleted uranium are used, with a polycrystalline, single crystal, amorphous (metallic glass) or nano-structured microstructure. Alloying metals for the tungsten may be iron, nickel, cobalt. Amounts of alloying metal in the WHA are present in amounts of less than 20 wt.%.

The penetrator has length which is preferably in excess of 20 cm, and may easily be made of a length up to 1 m or more. The core has preferably an L/D ration in excess of 30. In general this may be even more with penetrators that have length in excess of 20 cm, as the core will in general not be much thinner than 6 mm in diameter.

The tube that is to be clad onto the core (rod) should have a larger inner diameter then the diameter of the rod. By centering the tube around the rod, a constant gap (stand-off) is created. Both metals may be glued to a temporary base plate (steel or wood) in order to fix their position. A second (cardboard or polymer) tube, that is longer and thicker then the metal tube, can be used to hold the explosive layer. This tube is also centered axisymmetrically which results in a constant layer thickness of the explosive mass.

After filling the gap between the tubes with an (AN-based powder) explosive, a detonator is placed on the explosive at the axis of symmetry.

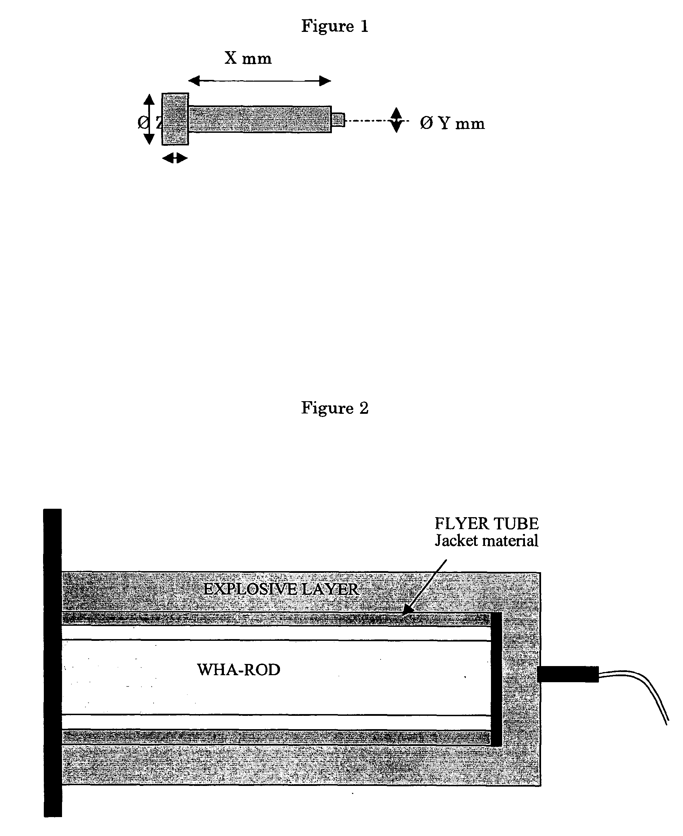

Upon detonation of the explosive, the metal tube will be accelerated radially towards the rod. The impact between the flyer tube and rod will lead to a metallurgical bond between the two. At the end of the impact process the rod is clad with the metallic flyer tube. (See figure 2)

After the low temperature welding process, i.e room temperature or below, but generally not in excess of 50°C, the penetrator may be subjected to a heat treatment. By this treatment at a temperature which is preferably between 250 and 750 °C and a period of time of not less than one hour, the remaining strain between the penetrator and the jacket material are substantially reduced. In case of the use of maraging steel this same heat treatment (3 hours in air) will increase the strength of the maraging steel significantly (up to 2000 MPa).

The gap between the starting materials (rod and tube) may be vacumized in order to prevent the deteriorating action of the air being pushed out from between the two impacting surfaces.

For explosive cladding the gap (stand-off) between the metals is an important process parameter and will be determined experimentally depending on the size of the final penetrator (L/D) and the nature of the materials to be used. Furthermore, any free metal edges (tube openings) experience another acceleration from the detonating explosive compared to the metal situated further away from free edges. This results in an unbonded area of the free metal edges (about 5 to 10 times the metal thickness involved).

In order to position the rod axi-symmetricaly inside the tube (jacket) during the explosive cladding process, i.e. that the gap is constant and the WHA rod is fully clad, use is preferably made of specially designed centering pins. These pins can be made out of any metal (steel, aluminum, etc.) and should be machined to have one end fit tightly into the flyer tube and the other end with the diameter equal to that of the rod. In order to facilitate the axial bonding between the pins (one on each side of the rod) and the rod, a small hole is drilled in the centerline of the edges of the rod. The pin has a corresponding part sticking out (as shown in figure 1). The pins are glued to the rod edges. The centering pins are made wider on the second end in order to get a close fit inside the ends of the tube (jacket material). In order to facilitate for the centering pins, the length of the tube is somewhat longer then the length of the rod to be clad.

By using pins that are long enough, the non-bonding effect of the free edges of the tube can be excluded from the rod area. By using the specially designed centering pins, the rods are clad optimally and over the complete rod length.The clad rods are machined to the required form and dimensions for their function as jacketed penetrator. Sometimes the clad rods need to be straightened or heat treated before being machined.

The invention is now elucidated on the basis of the following example, which is not intended to limit the invention.

### EXAMPLE:

A WHA-rod with a length of 240 mm and a diameter of 6 mm (L/D = 40) was surrounded by an unalloyed C-steel tube with an inner diameter of 9 mm and a wall thickness of 2 mm. Therefore, initially a constant gap of 1.5 mm existed between the two metal surfaces to be bonded. An explosive layer with constant layer thickness and density was applied around the C-steel tube and detonated inside an explosive chamber. The high pressure generated by the grazing detonation process accelerates the tube wall radially towards the WHA-rod. With the right parameters (mainly detonation velocity, mass ratio between the explosive and the tube and gap) the resulting inclined impact between the imploding tube surface on the rod results in a high quality explosive bond. The wall thickness of the steel tube has increased somewhat due to the implosion process. The clad rod is straightened and machined to the required final dimensions to be used as jacketed penetrator ammunition. Microscopy and ultrasonic investigation of the clad rod produced in this way demonstrated that no porosity or change in microstructure had occurred in both metals. A small increase in hardness was observed locally at the metal interface.

The interface (shear) strength was statically measured to be above 300 MPa.

## Claims

1. Process for the production of a jacketed penetrator having a tungsten, tungsten alloy or depleted uranium core and a metallic jacket, which process comprises placing the core inside the jacket and explosively welding the jacket on the core.

2. Process according to claim 1, wherein the penetrator has a length of at least 20 cm.

3. Process according to claim 1, wherein the core of the penetrator has an L/D ration of at least 30.

4. Process according to claim 1-3, wherein the welding step is followed by a heat treatment, preferably at a temperature of between 250 and 750°C for a period of time not less than 1 hour.

5. Process according to claim 1-4, wherein the annular area between the jacket and the core is placed under vacuum prior to the welding.

6. Process according to claim 1-5, wherein the explosive welding is done at a temperature below 50°C.

7. Process according to any one of the claims 1-6, wherein the core is maintained inside the jacket using a centering pin.

8. Jacketed penetrator obtainable by the process of any one of the claims 1-7.
